# EUROPEAN PATENT APPLICATION

(11) **EP 2 246 589 A1**
(43) Date of publication of application: **03.11.2010**
(21) Application number: 09714432.3
(22) Date of filing: 25.02.2009
(51) Int. Cl.: F16G 5/16

(54) **JIG FOR ASSEMBLING BELT AND METHOD FOR ASSEMBLING BELT AND METHOD FOR PRODUCING BELT**

(30) Priority: 28.02.2008 JP 2008047851
(71) Applicant: Toyota Jidosha Kabushiki Kaisha, Toyota-shi, Aichi 471-8571 (JP)
(72) Inventor: KOBAYASHI, Daisuke, Toyota-shi Aichi 471-8571 (JP); HATTORI, Yuji, Toyota-shi Aichi 471-8571 (JP); GOTANDA, Toshihiko, Toyota-shi Aichi 471-8571 (JP)
(74) Representative: TBK-Patent
(86) International application number: PCT/JP2009/053381
(87) International publication number: WO 2009/107643

(57) **Abstract**

To efficiently assemble or manufacture a belt by fastening a plurality of elements in a circular manner using a ring.

A belt assembling device 20 is adapted to assemble a belt by fastening a plurality of plate-like elements juxtaposed in a same orientation and in a circular manner using a ring 9. The belt assembling device 20 comprises a holding member 24. The holding member 24 holds the ring 9 to which the elements are attached sequentially, in a manner to keep a curvature radius of the ring 9 partially larger than that of the remaining portion. Therefore, the portion C of the ring 9 at which the curvature radius is thus kept larger can be twisted and deformed easily so that the element can be attached to the ring 9 at the portion C.

## Description

### TECHNICAL FIELD

This invention relates to an assembling device, an assembling method and a manufacturing method for assembling a belt, by juxtaposing a plurality of plate-like elements in a same orientation and in a circular manner, and by fastening those elements by a ring.

### BACKGROUND ART

A belt formed by juxtaposing a plurality of metal pieces called an "element" or a "block" in a circular manner, and by fastening the juxtaposing metal pieces by an endless carrier called a "ring" or a "hoop" is known in the prior art to be used in a continuously variable transmission. The belt of this kind is adapted to transmit the torque by a pushing force among the metal pieces thus juxtaposed to be contacted to one another. Specifically, the metal pieces existing in the groove of a drive pulley are sequentially pushed out of the groove by a rotation of the pulley while pushing the metal pieces in front of those metal pieces. The metal pieces thus being pushed forward are eventually entered into a groove of a driven pulley. As a result, the torque of the drive pulley is transmitted to the driven pulley by such advancement of the metal pieces.

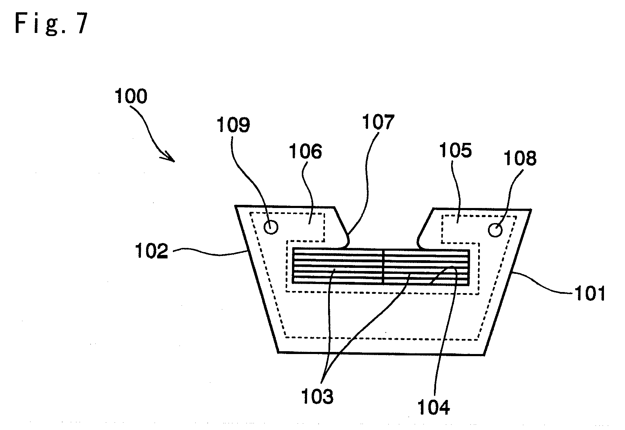

An example of the belt thus structured is disclosed in Japanese Patent Laid-Open No. 2000-205342. According to the teachings of Japanese Patent Laid-Open No. 2000-205342, an annular belt is formed by fastening a plurality of trapezoidal blocks using two rows of endless carriers. A block 100 is shown in Fig. 7 of the present application in more detail. The blocks 100 shown in Fig. 7 are juxtaposed annularly in an orientation to situate a short side thereof in an inner circumferential side. Lateral faces 101 and 102 of the block 100 thus juxtaposed are respectively inclined to be parallel to inner faces of a V-shaped groove of a not shown pulley. In the width center at the center of height of the block 100, there is formed a saddle face 104 on which the endless carriers 103 are disposed. A width of the saddle face 104 is wider than the total width of the carrier 103 arranged parallel to each other.

In addition, in order to prevent a detachment of the endless carrier 103 from the saddle face 104, in other words, in order to prevent a disengagement of the block 100 from the endless carrier 103, the block 100 is provided with stopper portions 105 and 106. Specifically, a shape of the stopper portions 105 and 106 is inverse L-shaped portion, and those the stopper portions 105 and 106 are erected respectively on both width ends of the saddle face 104 to cover width end portions of the endless carriers 103 from above. A clearance between the stopper portions 105 and 106 serves as an opening 107 to the saddle face 104. Protruding portions 108 and 109 having circular cross-section are formed on one of the faces (e.g., on the front face) of the stopper portions 105 and 106, and (not shown) concave portions are respectively formed on the opposite side of the protruding portions 108 and 109. Therefore, the protruding portions 108 and 109 are respectively inserted into the concave portions of the adjoining block 100.

The above-described endless carrier not only fastens the metal blocks juxtaposed annularly by contacting with the saddle face but also pulls out the blocks from the groove of the pulley. For this purpose, as taught by Japanese Patent Laid-Open No. 2000-205342, the block must be provided with the stopper portions. In order to situate the carrier on the width center of the block as taught by Japanese Patent Laid-Open No. 2000-205342, the stopper portions are erected on both width ends of the block thereby holding side edges of the carrier.

For this purpose, a clearance between the stopper portions, that is, a width of the opening has to be narrower than the total width of the endless carrier fastening the blocks. Therefore, in case of fastening the blocks by the carriers, the carriers are not allowed to pass though the opening of the block from above while being arranged parallel to each other as will be situated after the completion of the assembling work. That is, the blocks cannot be fastened by the carrier. In order to avoid such disadvantage, some sort of improvement is required to fasten the blocks by the endless carrier. However, any method or device for fastening the blocks continuously or efficiently by the carrier has not yet been developed in the prior art.

### DISCLOSURE OF THE INVENTION

The present invention has been conceived noting the technical problems thus far described, and its object is to efficiently assemble and manufacture a belt by fastening a plurality of elements in a circular manner using a ring.

In order to achieve the above-mentioned object, according to the present invention, there is provided a belt assembling device for assembling a belt by fastening a plurality of plate-like elements juxtaposed in a same orientation and in a circular manner using a ring, characterized by comprising: a holding member, which holds the ring in a manner to keep a curvature radius of a portion of the ring to which the elements are attached sequentially larger than a curvature radius of the remaining portion.

The aforementioned element comprises a saddle face on which the ring is disposed; and a stopper portion which is erected respectively on width ends of the saddle face to protrude toward an outer circumferential side in case the elements are juxtaposed in a circular manner, and which holds the ring disposed on the saddle face.

Specifically, the aforementioned holding member is adapted to hold the ring in an oval or elliptical manner entirely thereby keeping the curvature radius of the portion of the ring larger than that of the remaining portion.

Preferably, the belt is formed by fastening the plurality of elements using a plurality of rings arranged parallel to each other widthwise, and the holding member is adapted to hold at least two rows of the rings in a manner to keep the rings parallel to each other widthwise.

In addition, the holding member comprises at least a pair of widening members respectively having an arcuate face on its outer circumferential face to which the ring is applied, and the widening members are drawn away from each other thereby applying a tension to the ring.

Further, the holding member includes a shape fixing tool which keeps the ring ovally or elliptically by restricting a position of an outer circumferential face of the ring.

According to another aspect of the present invention, there is provided a belt assembling method and a belt manufacturing method for assembling a belt, by fastening a plurality of plate-like elements juxtaposed in a same orientation and in a circular manner using a ring, characterized by comprising: holding the ring in a manner to keep a curvature radius of a portion of the ring larger than a curvature radius of the remaining portion; and attaching the elements sequentially to the portion of the ring at which the curvature radius is kept larger in a manner to hold the ring by the element.

The element used in the methods of the present invention comprises a saddle face on which the ring is disposed; and a stopper portion which is erected respectively on width ends of the saddle face to protrude toward an outer circumferential side in case the elements are juxtaposed in a circular manner, and which holds the ring disposed on the saddle face.

According to the methods of the present invention, the ring can be held in an oval or elliptical manner entirely thereby keeping a curvature radius of a portion of the ring larger than a curvature radius of the remaining portion.

Preferably, the belt to be used in the methods of the present invention is formed by fastening the plurality of elements using a plurality of rings arranged parallel to each other widthwise. Specifically, according to the methods of the present invention, at least two rows of rings are kept parallel to each other widthwise, and the elements are attached to the rings thus kept parallel to each other.

As described, an endless ring is used to fasten the elements. However, according to the present invention, a curvature radius of a portion of the ring is kept larger than the remaining portion by the belt assembling device. That is, according to the present invention, a curvature radius of the ring is partially enlarged to be straightened or substantially straightened. The portion at which the curvature radius is thus enlarged can be deformed easier in comparison with the remaining portion. Therefore, in case of attaching the elements to the ring, the elements are attached to the portion of the ring at which the curvature radius is enlarged, and the portion of the ring at which the elements are thus attached is partially deformed in conformity with the configuration of the element. Thus, according to the present invention, the elements can be attached to the ring easily while deforming the ring. For this reason, the elements can be attached to the rings easily so that an assembling work of the belt can be carried out easily and efficiently.

As also described, the element comprises the saddle face on which the ring is disposed, and the stopper portion which is erected respectively on the width ends of the saddle face to protrude toward the outer circumferential side in case the elements are juxtaposed in a circular manner, and which is adapted to hold the ring disposed on the saddle face. However, according to the present invention, the elements can be attached to the ring while deforming the straightened or substantially straightened portion of the ring, even if the stopper portion for holding the side edges of the ring disposed on the saddle face are erected on both width ends of the saddle face. Specifically, according to the present invention, the portion of the ring can be deformed easily when passing through a clearance between the stopper portions to be disposed on the saddle face. Therefore, the elements can be attached easily to the rings so that an efficiency of manufacturing the belt can be improved.

The holding member of the assembling device can be adapted to hold the ring in an oval or elliptical manner entirely thereby keeping a curvature radius of a portion of the ring larger than that of the remaining portion. In this case, the ring is held in an oval or elliptical manner entirely by pulling symmetrical two portions of the ring away from each other. In this situation, a curvature radius of a portion of the ring is increased larger than that of the remaining portion, and the portion of the ring at which the curvature radius thereof is thus increased is strained linearly or almost linearly. Therefore, the element can be attached easily to the portion of the ring at which the curvature radius is thus increased.

According to the present invention, the belt can be formed by fastening the plurality of elements using a plurality of rings arranged parallel to each other widthwise, and the holding member is adapted to hold those rings while keeping parallel to each other widthwise. In this case, the belt is thus formed by fastening the elements using the plurality of rings arranged parallel to each other widthwise, therefore, the rings can easily be overlapped partially by deforming one of the rings at the portion where the curvature radius is kept enlarged relatively. For this reason, the elements can be attached to the rings easily and efficiently so that an efficiency of manufacturing the belt can be improved.

According to the present invention, moreover, a pair of widening members can be used as the holding member. As also described, an arcuate face to which the ring is applied is formed on the outer circumferential face of each widening member, and the widening members are adapted to be moved away from each other to apply tension to the ring. As a result, a distance between the widening members is widened and symmetrical two portions of the ring are thereby pulled radially outwardly Consequently, an intermediate portion of the ring between the widening members can be strained linearly or substantially linearly. That is, the curvature radius of the ring can be increased partially

Alternatively, a shape fixing tool which keeps the ring in an oval or elliptical shape by restricting a position of an outer circumferential face of the ring can also used as the holding member. In this case, positions of a plurality of portions of the ring are restricted by the shape fixing tools from the outer circumferential side. Therefore, the ring is entirely shaped into an oval or elliptical shape gently connecting those restricted points by an elastic force itself. For this reason, a curvature radius of a portion of the ring can be increased easily to be larger than the remaining portion. In this situation, the ring is not especially be tensioned so that the ring can be deformed easily at the portion to which the elements are attached. Therefore, the elements can be attached to the ring easily

According to the belt assembling method or the belt manufacturing method of the present invention, the ring is partially strained linearly or substantially linearly, and the elements are attached to the strained portion of the ring. The portion of the ring thus strained linearly or substantially linearly can be deformed or buckled easily Therefore, the elements can be attached to the ring easily so that the manufacturability of the belt can be improved.

As described, the element comprises the saddle face on which the ring is disposed, and the stopper portions for holding the ring on the saddle face are erected on the width ends of the saddle face to protrude toward the outer circumferential side of the elements juxtaposed in a circular manner. However, according to assembling method or the manufacturing method of the present invention, the elements can be attached to the ring while deforming the portion of the ring strained linearly or substantially linearly, even if the stopper portions for holding the side edges of the ring on the saddle face are erected on both width ends of the saddle face. Specifically, the portion of the ring can be deformed easily when passing through a clearance between the stopper portions to be disposed on the saddle face. Therefore, the elements can be attached easily to the rings so that an efficiently of manufacturing the belt can be improved.

In case of increasing the curvature radius of a portion of the ring larger than that of the remaining portion by holding the ring in an oval or elliptical manner, symmetrical two portions of the ring are pulled away from each other. As a result, the ring is held in an oval or elliptical manner entirely, and a curvature radius of a portion of the ring between the portions thus being pulled is partially enlarged larger than that of the remaining portion to be strained linearly or substantially linearly. Therefore, the elements can be attached easily to the portion of the ring at which the curvature radius is thus enlarged.

In addition, according to the methods of the present invention, the belt can be formed by fastening the plurality of elements using the plurality of rings arranged parallel to each other widthwise. For this purpose, at least two rows of rings are held parallel to each other widthwise, and the elements are attached to those two rows of rings. Since the belt is thus formed by fastening the plurality of elements using the plurality of rings arranged parallel to each other widthwise, the rings can easily be overlapped partially by deforming one of the rings at the portion where the curvature radius is enlarged relatively. Therefore, the elements can be attached easily to the rings so that an efficiency of manufacturing the belt can be improved.

### BRIEF DESCRIPTION OF THE DRAWINGS

Fig. 1 is a front view showing one example of the belt assembling device according to the present invention.
Fig. 2 is an explanation drawing explaining a procedure of fastening elements by two rows of rings.
Fig. 3 is a front view showing another example of the belt assembling device according to the present invention.
Fig. 4 is a view showing a section between arrows IV in Fig. 3.
Fig. 5 is a view schematically showing a continuously variable transmission using the belt to which the present invention is applied.
Fig. 6 is a front view showing the element forming the belt to which the present invention is applied.
Fig. 7 is a front view showing the block used in conventional belts.

### BEST MODE FOR CARRYING OUT THE INVENTION

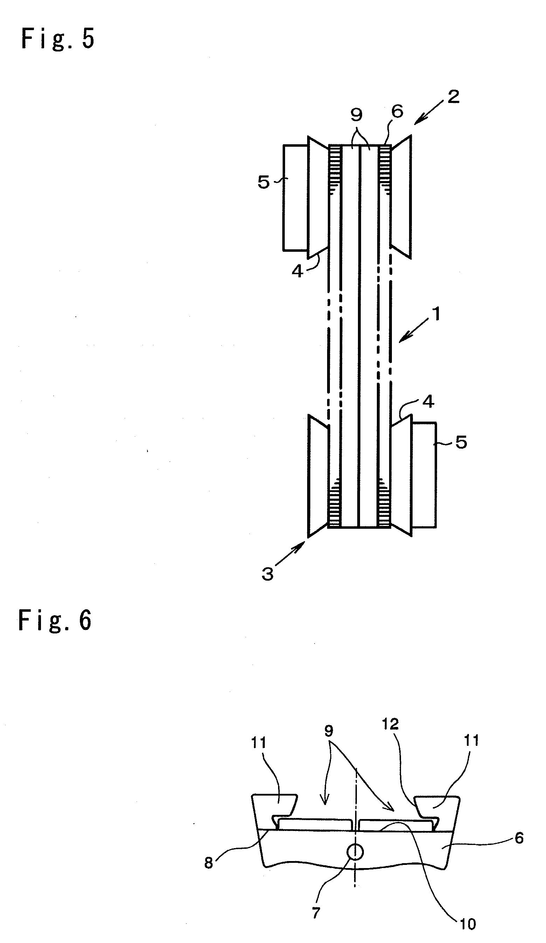

Next, examples of the present invention will be explained hereinafter. A belt to which the present invention is applied is adapted to be used in a continuously variable transmission. Specifically, a groove whose cross-sectional shape is V-shaped is formed on an outer circumference of the pulley of the continuously variable transmission, and the belt is applied to the groove of the pulley for the purpose of transmitting torque by a frictional force between the belt and pulleys. For example, as schematically shown in Fig. 5, a belt 1 is applied to a drive pulley 2 and a driven pulley 3 of the continuously variable transmission. Each pulley 2 and 3 comprises a pair of fixed sheave and movable sheave individually having a tapered face and being opposed to each other. Therefore, V-shaped groove 4 is formed between those sheaves, and a width of the groove 4 is varied by reciprocating the movable sheave by an actuator 5 such as hydraulic cylinder.

The belt 1 thus used is formed by fastening a plurality of elements in a circular manner by a ring, and both side faces or lateral faces thereof are tapered to be V-shaped. Fig. 6 shows an example of an element 6 used in the belt 1 shown in Fig. 5. Specifically, the element 6 is a plate-like member made of metal, and the elements 6 of same configuration and same dimensions are juxtaposed annularly in the same orientation. For the purpose of positioning the juxtaposed elements 6 vertically and horizontally, a male connection 7 as a protrusion is formed on one of the faces of the element 6, and a (not shown) female connection as a hole into which the male connection 7 is inserted loosely is formed on the opposite face. Specifically, the hole is formed by partially depressing one of the faces of the element 6, and the male connection 7 is thereby protruded from the opposite face of the element 6. Therefore, by inserting the male connection 7 into the hole of the adjoining element, a relative movement of the juxtaposed elements 6 in the radial direction, that is, in the vertical and horizontal directions can be restricted.

As described, the elements 6 are juxtaposed in a circular manner. Therefore, some of the elements 6 are inevitably juxtaposed not parallel to one another, in other words, some of the elements 6 being juxtaposed are inevitably spread like a fan (i.e., radially) around a center of curvature of the belt 1. In order to allow the elements 6 thus oscillated in a fan-like fashion to be contacted with one another, a rocking edge 8 is formed on the element 6. Specifically, the rocking edge 8 is a boundary or a boundary area at which the thickness of the element 6 is changed, and the rocking edge 8 is formed at a substantially center of the element 6 in the height direction while extending in a width direction of the element 6 (i.e., in a direction parallel with a rotational center axis of the pulley).

In case the belt 1 is applied to the pulleys 2 and 3, a circumferential length of an array of the elements 6 is longer at an upper side of the element 6 (that is, at an outer circumferential side of the belt 1). Therefore, clearances between the elements 6 around the pulley are widened at the upper portion thereof. To the contrary, the circumferential length of the array of the elements 6 is shorter at a lower side of the element 6 (that is, at an inner circumferential side of the belt 1). Therefore, the clearances between the elements 6 are narrowed at the lower portion thereof. For this reason, a thickness of the lower portion of the element 6 is reduced gradually toward a lower end thereof, and the portion at which the thickness of the element 6 is thus changed serves as the rocking edge 8. Thus, the element 6 is allowed to oscillate with respect to the rocking edge 8 to spread in the fan-like fashion, that is, a pitching of the elements 6 is allowed by the rocking edge 8. In addition, the rocking edge 8 is necessary to be formed only on one of the faces of the element 6. For example, the rocking edge 8 is formed on the face on which the male connection 7 is formed.

The element 6 further comprises a saddle face 10 on which a ring 9 is disposed (or arranged). Since the ring 9 fastening the elements 6 is thus contacted with the saddle face 10, a contact pressure between the ring 9 and the saddle face 10 is increased in case the belt 1 is transmitting the torque. Meanwhile, when the elements 6 moving ahead in the straight region enter into the groove of the pulleys 2 or 3 and oscillated in the fan-like fashion, the ring 9 slides on the saddle face 10 and this will result in a generation of large frictional force. Therefore, in order not to increase a moment resulting from such frictional force, the saddle face 10 is formed on a portion close to the rocking edge 8 as much as possible. That is, the saddle face 10 is formed at a substantially intermediate portion in the height direction of the saddle face 10.

The ring 9 of the belt 1 is formed by accumulating thin metal layers, and two rows of the rings 9 are arranged parallel to each other in the width direction thereof on the saddle face 10 thereby fastening the elements 6. Specifically, a width of the saddle face 10 is wider than a total width of the two rows of rings 9 arranged parallel to each other. According to the present invention, the ring 9 is disposed on the saddle face 10 to fasten the element array in the circular manner and to hold the elements 6 not to deviate outwardly in the radial direction. However, in addition to the above-mentioned functions, the ring 9 also functions to draw the elements 6 being discharged from the groove of the pulley 2 or 3 out of the groove. For this purpose, in order to prevent the ring 9 from deviating radially outwardly from the elements 6, a stopper portion is formed to hold the ring 9 in the space between the stopper portion and the saddle face 10.

In the example shown in Fig. 6, a hook portion 11 is erected respectively on both width ends of the element 6 while extending upwardly and covering the saddle face 10 partially from above. As shown in Fig. 6, the hook portion 11 is a latch (or inversed L-shaped) portion adapted to hold the width ends of the rings 9 disposed parallel to each other loosely in the clearances between the saddle face 10 and the hook portion 11. End portions of hook portions 11 are distant from each other, and a clearance therebetween serves as an opening 12 to the saddle face 10. The clearance between the hook portions 11, in other words, an opening width of the saddle face 10 is wider than a width of one of the rings 9, but narrower than a total width of two rows of rings 9.

As described, according to the example of the belt 1 to which the present invention is applied, the individual width of the ring 9 is thus narrower than the width of the opening 12 of the element 6, but the total width of two rows of the rings 9 is thus wider than the width of the opening 12 of the element 6. Therefore, in case of fastening all of the elements 6 by one of the rings 9 previously and then fastening the elements 6 by the other ring 9, the elements 6 fastened by said one of the rings 9 may be disengaged from the ring 9 during the subsequent fastening work of the elements 6 by the other ring 9. Thus, the elements 6 cannot be fastened by the rings 9 smoothly In addition, the total width of the two rows of rings 9 arranged parallel to each other in the width direction is wider than the width of the opening 12. That is, the rings 9 cannot be disposed on the saddle face 10 of the element 6 while being situated parallel to each other. Therefore, according to the present invention, the belt 1 is assembled and manufactured by a procedure and a device to be explained hereinafter.

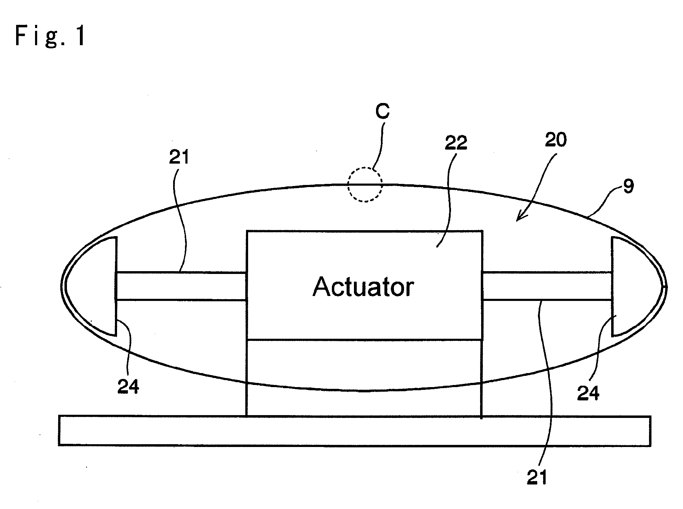

Fig. 1 is a front view showing an assembling device according to the present invention. As shown in Fig. 1, a device 20 is adapted to hold two rows of the rings 9 forming the belt 1 ovally or elliptically while keeping those rings 9 parallel to each other. Specifically, an actuator 22 is installed on a pedestal 23, and the actuator 22 is provided with a pair of rods 21. The rods 21 are adapted to be protruded away from each other and to be retracted to get closer to each other in a horizontal direction. The actuator 22 can be selected from the flowing types of actuators according to need, for example, an actuator adapted to reciprocate the rod 21 by rotating a pinion (not shown) meshing with a rack (not shown) integrated with the rod 21 by a motor (not shown), an actuator adapted to reciprocate the rod 21 hydraulically, an actuator adapted to rotate the pinion manually instead of using the motor, an actuator adapted to apply a thrust force always to the rod 21 by an elastic mechanism such as a spring and so on.

A pusher 24 corresponding to the holding member or the widening members of the present invention is attached to each leading end of the rod 21. The pusher 24 is adapted to hold two rows of the rings 9 parallel to each other while applying a predetermined tension to the rings 9. For this purpose, the pusher 24 is formed to have a smooth curved face to hold the rings 9 without bending. Specifically, a roller having a groove to which two rows of the rings 9 are disposed in parallel to each other, a semicircular holding member and so on can be used as the pusher 24. In the example shown in Fig. 1, a semicircle roller is used as the pusher 24.

In case of assembling or manufacturing the aforementioned belt 1, pushers 24 are retracted first of all, and two rows of the rings 9 are applied loosely to outer faces of the retracted pushers 24 while being arranged parallel to each other. Then, the pushers 24 are moved away from each other by the actuator 22. Consequently, symmetrical portions of the rings 9 are pushed by the pushers 24 diametrically outwardly to be widened, and the rings 9 are thereby deformed into an oval or an elliptical shape. In this situation, a curvature radius of the ring 9 at an intermediate portion C between the portions being pushed by the pushers 24 is enlarged locally so that the portion C is substantially straightened. In this situation, the rings 9 are held in an oval manner as shown in Fig. 1.

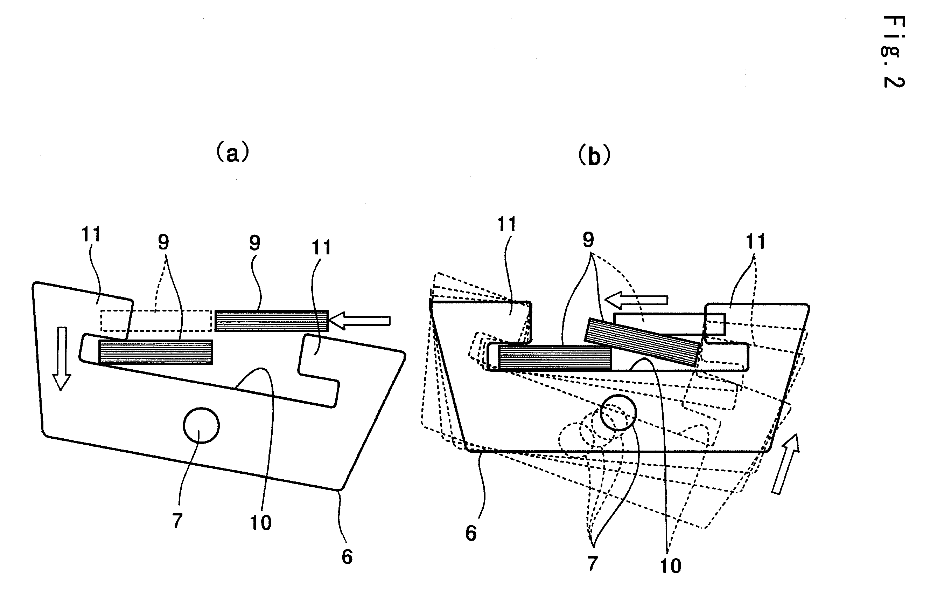

Thus, a curvature of the intermediate portion C of the ring 9 is reduced so that the ring 9 can be deformed, that is, can be bent or twisted easily at the intermediate portion C. Therefore, by utilizing such characteristics, the element 6 is attached to the rings 9 at the intermediate portion C where the curvature thereof is reduced (that is, the curvature radius thereof is increased), especially, to an upper intermediate portion C of the two intermediate portions C. A procedure (i.e., a method) of attaching the element 6 to the rings 9 is shown in Fig. 2.
As described, in the element 6, the hook portions 11 are erected on both width ends of the saddle face 10. Therefore, first of all, the element 6 is situated under the ring 9 at the intermediate portion C in a manner to orient the opening 12 thereof to open to the inner circumferential faces of the rings 9. Then, a side edge (i.e., an outer side edge) of one of the rings 9 is inserted into a space between the saddle face 10 and one of the hook portions 11. In this situation, as shown in Fig. 2 (a), said one of the rings 9 is pulled downwardly together with the element 6 toward the inner circumferential side thereof. As a result, levels of two rows of the rings 9 which are formerly arranged parallel to each other closely, or which are formerly arranged parallel to each other while contacting inner side edges thereof are differentiated in the vertical direction. In this situation, however, the total width of the rings 9 is still wider than the opening width of the opening 12 of the element 6. Therefore, the other ring 9 is not allowed to enter into the opening 12 to be disposed on the saddle face 10.

Then, the upper ring 9 of the rings 9 thus split vertically, that is, the ring 9 not yet disposed on the saddle face 10 of the element 6 is moved relatively in its width direction toward the outer circumference of the ring 9 being pulled downwardly together with the element 6. For this purpose, the upper ring 9 to be disposed on the saddle face 10 has to be deformed partially widthwise. However, as described, the curvature radius of the portion of the ring 9 to which the element 6 is attached is increased so that the upper ring 9 can be deformed easily at this portion. Therefore, the rings 9 can be overlapped partially. In this case, the ring 9 to be moved in its width direction will not be moved entirely in its width direction. That is, as shown in Fig. 2 (b), the upper ring 9 is moved partially in its width direction while being twisted. Consequently, the upper ring 9 is inclined to be overlapped partially on the lower ring 9.

As a result of thus overlapping two rows of the rings 9 partially, the total width of the rings 9 is reduced to be narrower than before so that at least the (outer) side edge of the upper ring 9 is allowed to enter into the opening 12 of the element 6. Then, as indicated by broken lines and an arrow in Fig. 2 (b), the element 6 is pivoted counterclockwise around the one of the hook portions 11 (i.e., around the left hook portion 11 in Fig. 2). As a result, the other hook portion 11 is moved upwardly so that the outer side edge of the upper ring 9 is allowed to enter into a space between the saddle face 10 and the other hook portion 11.

Then, the element 6 is lifted, and the upper ring 9 thus deformed to be overlapped on the lower ring 9 is returned to be parallel to the lower ring 9. As a result, attachment of the element 6 to the two rows of rings 9 is completed. The element 6 thus attached to the rings 9 is then moved along the rings 9 away from the intermediate portion C. Then, the remaining elements 6 are attached to the rings 9 sequentially by the procedure as has been explained, at the intermediate portion C where the curvature of the ring 9 is small.

In addition, the element 6 can be attached to the rings 9 one by one. Alternatively, a plurality of the elements 6 may also be attached to the rings 9 simultaneously by holding the plurality of elements 6 in a (not shown) holder or cartridge, and attaching the elements 6 in the holder or cartridge to the rings 9 at the same time. Further, the elements 6 may also be attached to the rings 9 automatically using an automated machinery or an industrial robot (not shown) adapted to handle the elements 6 as explained above, instead of attaching the element 6 to the rings 9 manually. In addition, with progression of the fitting work of the element 6, the elements 6 are eventually attached to the rings 9 even around the portion of the rings 9 being pushed by the pusher 24. In this situation, the pusher 24 is retracted to create a space for holding the element 6 between the pusher 24 and the rings 9, and the pusher 24 pushes the element 6 to maintain the rings 9 in the shape shown in Fig. 1.

Thus, the intermediate portion C is respectively created on two rows of the rings 9 held by the device 20, and the curvature radius of each of the ring 9 at the portion C is kept larger than the remaining portion (that is, the curvature is small). Therefore, the ring 9 can be bent and twisted easily at the intermediate portion C so that the ring 9 can be deformed and displaced widthwise easily at the intermediate portion C. For this reason, the element 6 can be attached easily to the rings 9 even if the total width of two rows of the rings 9 is wider than the width of the opening 12 between the hook portions 11 erected on both width ends of the saddle face 10, by deforming and displacing the ring 9 as explained above. As a result, the belt 1 can be assembled efficiently and manufacturability of the belt 1 is thereby improved.

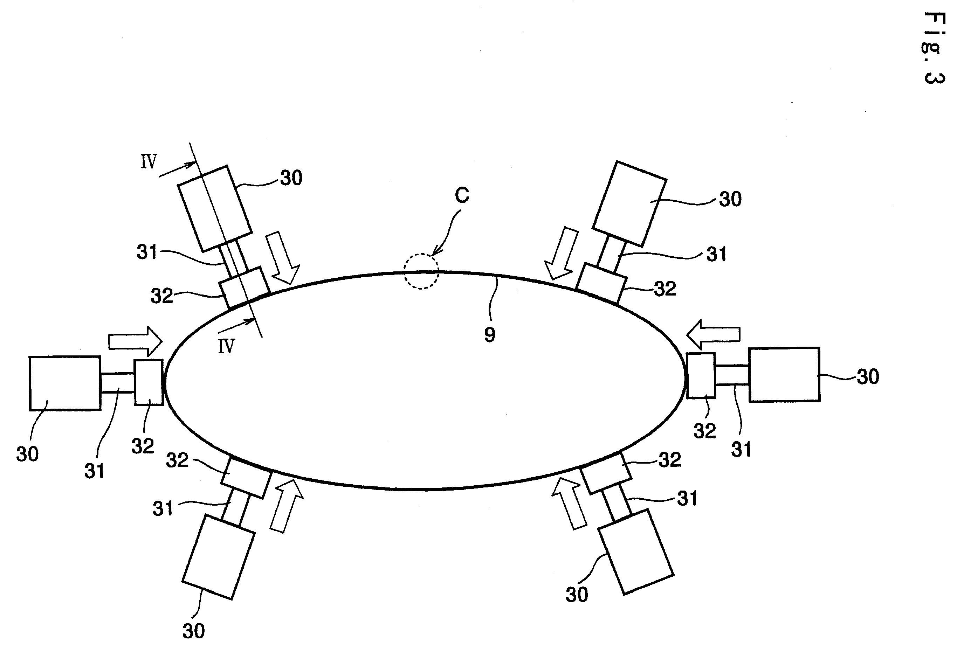

The present invention should not be limited to the example thus has been explained. For example, the assembling device of the present invention may also be adapted to hold the ring 9 ovally or elliptically by applying compressive force to the ring 9, instead of applying tension to the ring 9. An example thereof is schematically shown in Fig. 3. As shown in Fig. 3, a plurality of direct acting type actuators 30 is arranged around the outer circumferential faces of two rows of the rings 9. Specifically, the actuator 30 is adapted to reciprocate a rod 31 thereof electrically or hydraulically, and actuators 30 are respectively oriented to the inner circumferential side or the center of the ring 9.

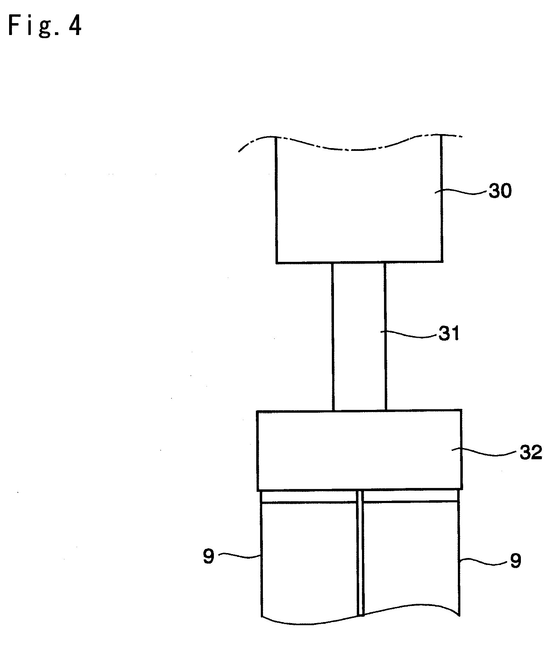

Those actuators 30 are respectively provided with a ring holding member 32 at a leading end of the rod 31. The ring holding member 32 is adapted to hold the rings 9 arranged parallel to each other in an appropriate shape such as an oval or an elliptical manner by pushing the outer circumferential face of the rings 9. For example, as shown in Fig. 4, a pushing face of the holding member 32 is formed into a flat face to hold the ring 9 by a frictional force resulting from pushing the ring 9. Alternatively, the pushing face of the pushing member 32 may also be formed into a curved face to have a desirable curvature of the ring 9. In addition to the flat or curved pushing face, the pushing member 32 may also be provided with a holding portion congruent with the outline of lower portion of the element 6 (i.e., a portion of the inner circumferential side of the element 6 attached the ring 9).

Thus, according to the example shown in Figs. 3 and 4, the rings 9 can be held in a desirable shape such as an oval shape or an elliptical shape by adjusting pushing force of each actuator 30 arranged around the rings 9. As a result, a curvature radius of a portion of the ring 9 is increased larger than that of the remaining portion so that the portion of the ring 9 thus having larger curvature radius can be bent or twisted easily Therefore, as the example previously explained, the element 6 can be attached easily to the two rows of rings 9.

The present invention should not be limited to the devices and the methods for assembling a belt thus far explained. For example, a number of the rings to be used should not be limited to two rings. As described, the rings are adapted to fasten the elements by being held by the hook portions at the outer side edge of each ring. Therefore, at least two rings are required to fasten the element but three or more rings may also be used to fasten the elements. In addition, the holding member of the present invention should not be limited to a mechanism having a driving mechanism such as an actuator. For example, a fixture such as a frame member adapted to hold one-third part to a half part of the rings in the length direction may also be used as the holding member.

## Claims

1. A belt assembling device for assembling a belt by fastening a plurality of plate-like elements juxtaposed in a same orientation and in a circular manner using a ring, **characterized by** comprising:
a holding member, which holds the ring in a manner to keep a curvature radius of a portion of the ring to which the elements are attached sequentially larger than a curvature radius of the remaining portion.

2. The belt assembling device as claimed in claim 1, wherein the element comprises:
a saddle face on which the ring is disposed; and
a stopper portion which is erected respectively on width ends of the saddle face to protrude toward an outer circumferential side in case the elements are juxtaposed in a circular manner, and which holds the ring disposed on the saddle face.

3. The belt assembling device as claimed in claim 1 or 2, wherein:
holding member is adapted to hold the ring in an oval or elliptical manner entirely thereby keeping the curvature radius of the portion of the ring larger than that of the remaining portion.

4. The belt assembling device as claimed in any of claims 1 to 3, wherein:
the belt is formed by fastening a plurality of the elements using a plurality of rings arranged parallel to each other widthwise; and
the holding member is adapted to hold at least two rows of the rings in a manner to keep the rings parallel to each other widthwise.

5. The belt assembling device as claimed in any of claims 1 to 4, wherein:
the holding member comprises at least a pair of widening members respectively having an arcuate face on its outer circumferential face to which the ring is applied; and
the widening members are drawn away from each other thereby applying a tension to the ring.

6. The belt assembling device as claimed in any of claims 1 to 4, wherein:
the holding member includes a shape fixing device which keeps the ring ovally or elliptically by restricting a position of an outer circumferential face of the ring.

7. A belt assembling method for assembling a belt, by fastening a plurality of plate-like elements juxtaposed in a same orientation and in a circular manner using a ring, **characterized by** comprising:
holding the ring in a manner to keep a curvature radius of a portion of the ring larger than a curvature radius of the remaining portion; and
attaching the elements sequentially to the portion of the ring at which the curvature radius is kept larger in a manner to hold the ring by the element.

8. The belt assembling method as claimed in claim 7, wherein the element comprises:
a saddle face on which the ring is disposed; and
a stopper portion which is erected respectively on width ends of the saddle face to protrude toward an outer circumferential side in case the elements are juxtaposed in a circular manner, and which holds the ring disposed on the saddle face.

9. The belt assembling method as claimed in claim 7 or 8, wherein:
the ring is held in an oval or elliptical manner entirely thereby keeping a curvature radius of the portion of the ring larger than the curvature radius of the remaining portion.

10. The belt assembling method as claimed in any of claims 7 to 9, wherein:
the belt is formed by fastening the plurality of elements using a plurality of the rings arranged parallel to each other widthwise; and
comprising
holding at least two rows of rings while keeping the rings parallel to each other widthwise; and
attaching the element to the two rows of rings.

11. A belt manufacturing method for manufacturing a belt, by fastening a plurality of plate-like elements juxtaposed in a same orientation and in a circular manner using a ring, **characterized by** comprising:
holding the ring in a manner to keep a curvature radius of a portion of the ring larger than a curvature radius of the remaining portion; and
attaching the elements sequentially to the portion of the ring at which the curvature radius is kept larger in a manner to hold the ring by the element.

12. The belt manufacturing method as claimed in claim 11, wherein the element comprises:
a saddle face on which the ring is disposed; and
a stopper portion which is erected respectively on width ends of the saddle face to protrude toward an outer circumferential side in case the elements are juxtaposed in a circular manner, and which holds the ring disposed on the saddle face.

13. The belt manufacturing method as claimed in claim 11 or 12, wherein:
the ring is held in an oval or elliptical manner entirely thereby keeping a curvature radius of the portion of the ring larger than the curvature radius of the remaining portion.

14. The belt manufacturing method as claimed in any of claims 11 to 13, wherein:
the belt is formed by fastening the plurality of elements using a plurality of the rings arranged parallel to each other widthwise; and
comprising
holding at least two rows of rings while keeping the rings parallel to each other widthwise; and
attaching the element to the two rows of rings.
